# EUROPEAN PATENT SPECIFICATION

(11) **EP 3 748 149 B1**
(45) Date of publication and mention of the grant of the patent: **05.04.2023**
(21) Application number: 20178629.0
(22) Date of filing: 05.06.2020
(51) Int. Cl.: F02C 9/00, B64D 31/00

(54) **ENGINE AND THRUST CONTROL OF AIRCRAFT IN NO DWELL ZONE**
MOTOR UND SCHUBREGELUNG EINES FLUGZEUGES IN KEINER VERWEILZONE
COMMANDE DE MOTEUR ET DE POUSSÉE D'UN AÉRONEF DANS UNE ZONE SANS ARRÊT

(30) Priority: 06.06.2019 US 201916433995
(43) Date of publication of application: 09.12.2020
(73) Proprietor: Gulfstream Aerospace Corporation, Savannah, Georgia 31402 (US)
(72) Inventor: RUHAN, Desmond, Savannah, Georgia 31402 (US)
(74) Representative: LKGlobal UK Ltd.

(56) References cited:
- EP-A1- 3 271 250
- US-B1- 6 880 784
- US-B2- 10 125 690

## Description

### TECHNICAL FIELD

The technical field relates generally to controlling engine(s) and thrust of an aircraft, and more particularly, relates to controlling engines and thrust of an aircraft in a no dwell zone that is defined by one or more vibration resonance modes of the compressor spools of the aircraft engines.

### BACKGROUND

Many aircraft use turbojet engines to generate thrust. A turbojet engine is a gas turbine engine that works by compressing air with an inlet and a rotating compressor fan(s), mixing fuel with the compressed air, burning the mixture in a combustor, and then passing the hot, high-pressure air through a turbine and a nozzle to generate thrust.

At certain rotational speeds and corresponding thrust levels, the compressor spools of turboj et engines will experience one or more vibration resonance modes that occur in one or more operating ranges or zones between engine idle and maximum thrust. If a turbojet engine dwells or otherwise continues to operate in one of these vibration resonance modes for a time, the engine may begin to increasingly vibrate, potentially causing an issue(s). For instance, in icy conditions, ice that forms around the inlet can shed or otherwise break free from vibrations and cause damage to the engine. For example, ice that has broken free from around the inlet causes an imbalance on the low-pressure spool and the rotating compressor fan tips can rub the abradable in the fan casing, causing an increase in fan tip clearance and decreasing engine thrust. Depending on weather and flying condition, pilots typically avoid having their engines operate within these vibration resonance zones for a time, and as such, these vibration resonance zones are referred to as "no dwell zones" (NDZ). FAA regulations, however, require that the aircraft engines be able to operate continuously everywhere in the range between engine idle and maximum thrust.

Accordingly, it is desirable to provide an aircraft, a system and a method for controlling engines and thrust while operating in a no dwell zone. Furthermore, other desirable features and characteristics of the various embodiments described herein will become apparent from the subsequent detailed description and the appended claims, taken in conjunction with the accompanying drawings and this background.
EP 3271250 relates generally to aircraft engine synchronization and more particularly to the synchronization of multi-spool engines on aircraft having at least two engines.
US 6880784 discloses an automatic takeoff thrust management system that can be used in an aircraft with at least two engines.
US 10125690 relates to a method and a system for starting up a turbomachine of an aircraft, in particular of a transport airplane.

### SUMMARY

Various embodiments of an aircraft, an engine electronic controller system, and a method for controlling thrust of an aircraft in a no dwell zone (NDZ), are provided herein.

In a first embodiment, the aircraft according to claim 3 includes, but is not limited to, a fuselage having a first side and a second side disposed opposite the first side. The aircraft further includes, but is not limited to, a first engine that is disposed adjacent to the first side of the fuselage. The first engine includes a first compressor fan that rotates at a first speed cooperatively with the first engine generating a first thrust. The aircraft further includes, but is not limited to, a first engine electronic controller that is in communication with the first engine and configured to control the first engine. The aircraft further includes, but is not limited to, a second engine that is disposed adjacent to the second side of the fuselage. The second engine includes a second compressor fan that rotates at a second speed cooperatively with the second engine generating a second thrust. The aircraft further includes, but is not limited to, a second engine electronic controller that is in communication with the second engine and configured to control the second engine. The aircraft further includes, it is not limited to, at least one of a throttle quadrant assembly (TQA) and an auto thrust controller that is in communication with the first and second engine electronic controllers to provide engine thrust commands. When the engine thrust commands correspond to an engine response within a no dwell zone (NDZ) that is defined from a compressor fan speed lower boundary to a compressor fan speed upper boundary, the first engine electronic controller is operative to direct the first engine to have the first speed of the first compressor fan one of at and below the compressor fan speed lower boundary. The second engine electronic controller is operative to direct the second engine to have the second speed of the second compressor fan one of at and above the compressor fan speed upper boundary such that the second thrust of the second engine is greater than the first thrust of the first engine to produce an overall average thrust that corresponds to the engine response within the no dwell zone (NDZ).

In another embodiment, the engine electronic controller system according to claim 1 is for an aircraft having a first engine that includes a first compressor fan that rotates at a first speed cooperatively with the first engine generating a first thrust and a second engine that includes a second compressor fan that rotates at a second speed cooperatively with the second engine generating a second thrust. The engine electronic controller system includes, but is not limited to, a first engine electronic controller that is configured to communicate with and control the first engine. The engine electronic controller system further includes, but is not limited to, a second engine electronic controller that is configured to communicate with and control the second engine. The engine electronic controller system further includes, but is not limited to, at least one of a throttle quadrant assembly (TQA) and an auto thrust controller that is configured to communicate with the first and second engine electronic controllers to provide engine thrust commands. When the engine thrust commands correspond to an engine response within a no dwell zone (NDZ) that is defined from a compressor fan speed lower boundary to a compressor fan speed upper boundary, the first engine electronic controller is operative to direct the first engine to have the first speed of the first compressor fan one of at and below the compressor fan speed lower boundary. The second engine electronic controller is operative to direct the second engine to have the second speed of the second compressor fan one of at and above the compressor fan speed upper boundary such that the second thrust of the second engine is greater than the first thrust of the first engine to produce an overall average thrust that corresponds to the engine response within the no dwell zone (NDZ).

In another embodiment, the method according to claim 11 includes, but is not limited to, rotating a first compressor fan of a first engine of the aircraft at a first speed cooperatively with the first engine generating a first thrust. The method further includes, but is not limited to, rotating a second compressor fan of a second engine of the aircraft at a second speed cooperatively with the second engine generating a second thrust. The method further includes, but is not limited to, communicating engine thrust commands from at least one of a throttle quadrant assembly (TQA) and an auto thrust controller to a first engine electronic controller and a second engine electronic controller. The first engine electronic controller is configured to communicate with and control the first engine and the second engine electronic controller is configured to communicate with and control the second engine. The method further includes, but is not limited to, directing via the first engine electronic controller the first engine to have the first speed of the first compressor fan one of at and below the compressor fan speed lower boundary when the engine thrust commands correspond to an engine response within the no dwell zone (NDZ). The method further includes, but is not limited to, directing via the second engine electronic controller the second engine to have the second speed of the second compressor fan one of at and above the compressor fan speed upper boundary when the engine thrust commands correspond to the engine response within the no dwell zone (NDZ) such that the second thrust of the second engine is greater than the first thrust of the first engine, producing an overall average thrust that corresponds to the engine response within the no dwell zone (NDZ).

### BRIEF DESCRIPTION OF THE DRAWINGS

The various embodiments will hereinafter be described in conjunction with the following drawing figures, wherein like numerals denote like elements, and wherein:
FIG. 1 illustrates a perspective view of an aircraft in accordance with an exemplary embodiment;
FIG. 2 illustrates a top view of a portion of an aircraft including a fuselage, engines, and engine electronic controllers in accordance with another exemplary embodiment;
FIG. 3 illustrates a tear-away perspective side view of an engine in accordance with an exemplary embodiment;
FIG. 4 is a graphical representation of engine thrust versus compressor fan speed including a no dwell zone in accordance with an exemplary embodiment;
FIG. 5 is a block diagram of an engine electronic controller system in accordance with an exemplary embodiment;
FIGS. 6A-6F illustrate engine responses including compressor fan speeds to various engine thrust commands in accordance with exemplary embodiments;
FIG. 7 illustrates a block diagram of an engine electronic control unit in accordance with an exemplary embodiment; and
FIG. 8 illustrates a method for controlling thrust of an aircraft in a no dwell zone in accordance with an exemplary embodiment.

### DETAILED DESCRIPTION

The following Detailed Description is merely exemplary in nature and is not intended to limit the various embodiments or the application and uses thereof. Furthermore, there is no intention to be bound by any theory presented in the preceding background or the following detailed description.

Various embodiments contemplated herein relate to aircraft, engine electronic controller systems, and methods for controlling thrust of an aircraft in a no dwell zone (NDZ). The exemplary embodiments taught herein provide an aircraft with wings extending laterally outward from a fuselage that has a first side and a second side disposed opposite the first side. The aircraft includes a first engine that is disposed adjacent to the first side of the fuselage and that includes a first compressor fan that rotates at a first speed cooperatively with the first engine generating a first thrust. A first engine electronic controller is in communication with the first engine and is configured to control the first engine. A second engine is disposed adjacent to the second side of the fuselage and includes a second compressor fan that rotates at a second speed cooperatively with the second engine generating a second thrust. A second engine electronic controller is in communication with the second engine and is configured to control the second engine.

The aircraft includes a throttle quadrant assembly (TQA) and/or an auto thrust controller that is in communication with the first and second engine electronic controllers to provide engine thrust commands. In an exemplary embodiment, when the engine thrust commands correspond to an engine response within a no dwell zone (NDZ) that is defined from a compressor fan speed lower boundary to a compressor fan speed upper boundary, the first engine electronic controller directs the first engine to have the first speed of the first compressor fan at or below the compressor fan speed lower boundary and the second engine electronic controller directs the second engine to have the second speed of the second compressor fan at or above the compressor fan speed upper boundary. As such, the second thrust of the second engine is greater than the first thrust of the first engine, producing an overall average thrust that corresponds to the engine response within the no dwell zone (NDZ). In an exemplary embodiment, advantageously biasing the operation of the first and second engines at different compressor fan speeds at the boundaries or just outside of the boundaries of the no dwell zone while producing an overall average thrust that is within the no dwell zone, allows the aircraft to continuously operate within the no dwell zone for an extended time without the first and second engines experiencing increasing levels of vibrations.

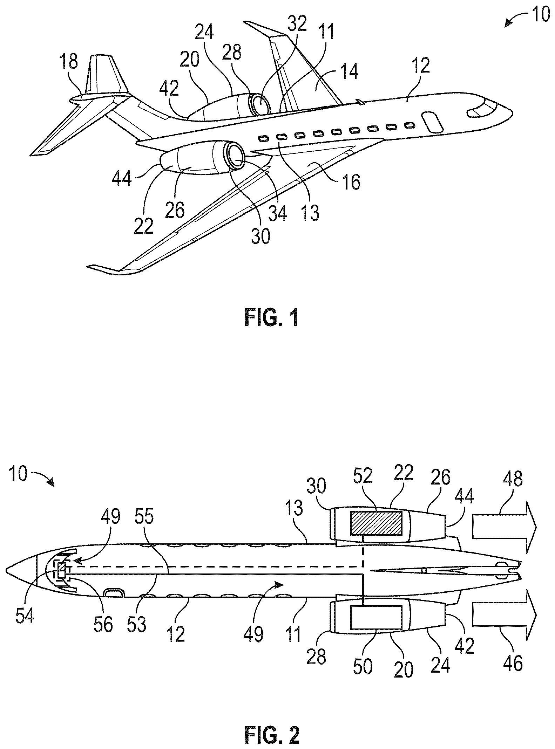

FIG. 1 illustrates a perspective view of an aircraft 10 in accordance with an exemplary embodiment. The aircraft 10 includes a fuselage 12 as the main body of the aircraft 10 that supports the wings 14 and 16 that extend laterally outward from opposing sides 11 and 13 of the fuselage 12, and a tail 18. Engines 20 and 22 are disposed adjacent to the sides 11 and 13, respectively, of the fuselage 12. In an exemplary embodiment, the engine 20 is mounted to the side 11 of the fuselage 12 forward of the tail 18 and aft of the wing 14. Likewise, the engine 22 is mounted to the side 13 of the fuselage 12 forward of the tail 18 and aft of the wing 16.

Referring also to FIGS. 2-3, in an exemplary embodiment, the engines 20 and 22 are configured as turbojet engines 24 and 26. The turbojet engines 24 and 26 operate by compressing air with inlets 28 and 30 and compressor fans 32 and 34 that are rotating at operating speeds, mixing fuel with the compressed air, burning the mixture in combustors, and then passing the hot, high-pressure air through turbines 38 and 40 and nozzles 42 and 44 to generate thrust 46 and 48, respectively.

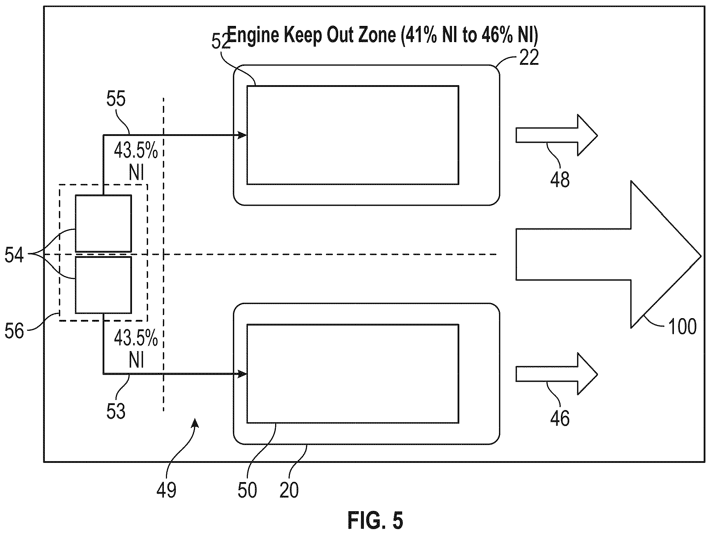

Referring to FIGS. 2 and 5, in an exemplary embodiment, the aircraft 10 includes an engine electronic controller system 49. The engine electronic controller system 49 includes engine electronic controllers 50 and 52 in communication with the engines 20 and 22, respectively, to control the engines 20 and 22. As will be discussed in further detail below, a throttle quadrant assembly (TQA) 54 and/or auto thrust controller 56 is in communication with the engine electronic controllers 50 and 52 to provide engine thrust commands 53 and 55, respectively.

In an exemplary embodiment, a non-limiting example of the basic operation and function of the throttle quadrant assembly (TQA) 54 and the auto thrust controller 56 is provided. The Throttle Quadrant Assembly (TQA) is an electromechanical Line-Replaceable Unit (LRU) that senses thrust commands from the throttle lever angles and transmits redundant position signals to the Full Authority Digital Engine Control (FADEC). Dual redundant position signals are produced independently by each of the throttle levers by means of RVDT channels. Each lever is connected to one engine with complete independence between engines. Each thrust lever includes an auto thrust servo to move the thrust levers during auto thrust operation. The TQA provides thrust control levers, AT engage/disengage switches, Take Off / Go Around switches, override sensing for pilot interface. The TQA interfaces with the AT by accepting lever position rates and positioning the thrust levers to adjust the engines' thrust. The aircraft Auto Thrust (AT) function performs all automatic engine thrust control as well as single engine thrust control for all modes. The AT interfaces with a variety of aircraft systems, including the Throttle Quadrant Assembly (TQA), FMS and TSCs and provides thrust control commands to the Electronic Engine Control (EEC). When the pilot presses one of the TOGA switches on the thrust levers, takeoff mode is armed. With the thrust levers advanced to greater than 19° TRA, pressing one of the auto thrust engage/disengage switches on the thrust levers engages the AT and takeoff mode is engaged. The AT sets the takeoff thrust and then at 60 knots Indicated Airspeed (IAS), the takeoff thrust hold control mode releases the TQA servo clutches to ensure that thrust changes do not occur during takeoff roll and initial climb. The thrusts remain at the hold position until 400 ft. AGL and then the clutches re-engage. During cruise, the AT syncs and trims the engines thrust per the selected mode from the pilot. The AT can also be coupled to the FMS via the flight guidance panel. The AT provides speed and thrust envelope limiting. Thrust envelope limiting is based on the active N1 Rating while speed envelope limiting is based on minimum speed limits as well as placard and structural speed limits. AT thrust envelope limiting is provided while the AT is engaged in closed loop thrust control. AT speed envelope limiting, as well as thrust envelope limiting, is provided while the AT is engaged in speed mode. The AT provides a retard function that moves the thrust levers to the idle position during aircraft flare. In all these modes the AT system synchronizes both engines to the same thrust setting.

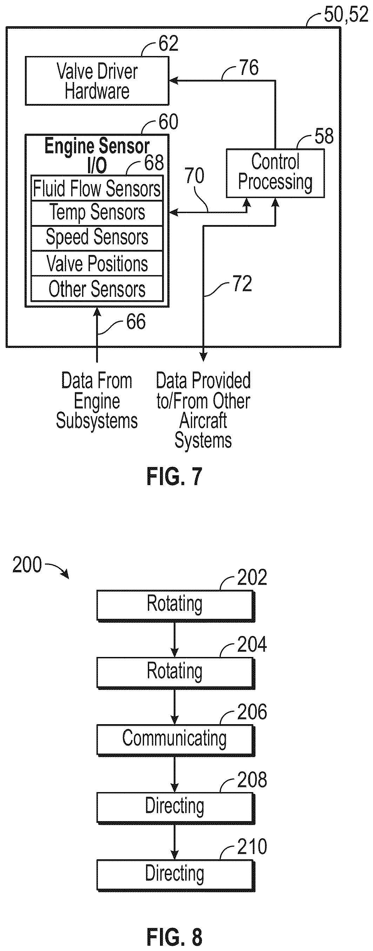

FIG. 7 illustrates a block diagram representing, independently, each of the engine electronic controllers 50, 52 in accordance with an exemplary embodiment. The engine electronic controller 50, 52 includes blocks for performing Engine Electronic Controller (EEC) functions. The engine electronic controller 50, 52 includes, for example, a processor 58, an engine sensor input-output interface 60, engine valve driver hardware 62,. The processor 58, the engine sensor input-output interface 60, the engine valve driver hardware 62 are used in performing the EEC functions.

The engine sensor input-output interface 60 receives data 66 from various engine sub-systems (not illustrated), and provides it to the various sensors 68 that may include, for example fluid flow sensors, temperature sensors, speed sensors, valve position sensors, etc. The sensors 68 generate sensor data output signals 70 that are provided to the processor 58.

As part of the EEC functions, the processor 58 processes data 72 provided from various aircraft systems (e.g., including engine thrust commands 53 and 55 from the throttle quadrant assembly (TQA) 54 and/or the auto thrust controller 56), the sensor data output signals 70 to generate engine valve control signals 76 that are provided to the engine valve driver hardware 62 to control the corresponding engine 20, 22 of the aircraft 10. The processor 58 also provides data 72 to other aircraft systems.

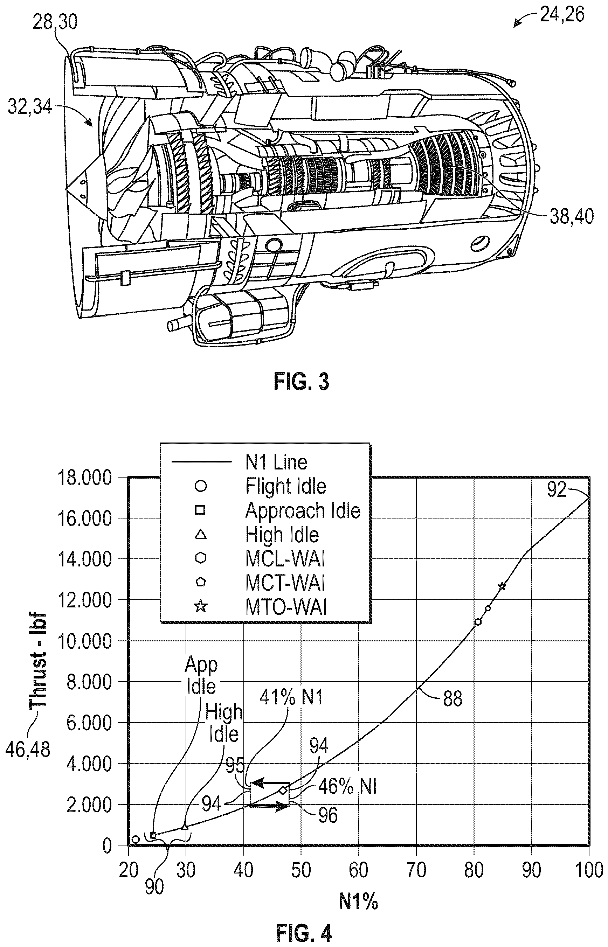

FIG. 4 is a graphical representation of engine thrust 46, 48 versus compressor fan 32, 34 speed N1 (i.e., rotational speed) as a percentage of maximum speed, which is indicated as "N1 %." Referring to FIGS. 3-5, the compressor fan speed N1 % is related to the engine thrust 46, 48 defined by line 88. As such, the compressor fans 32 and 34 cooperate with the engines 20 and 22 to generate thrust 46 and 48. The idle thrust 90 for the engine 20, 22 is from about 20 to about 35%, for example from about 24 to about 30%, of the maximum thrust 92. In this example, a no dwell zone 94 (NDZ) or compressor fan vibration resonance mode occurs from a compressor fan speed lower boundary 95 to a compressor fan speed upper boundary 96 corresponding to N1 % from about 41% to about 46%, respectively, of the maximum speed of the compressor fan 32, 34. Although only one no dwell zone 94 is illustrated, it is to be understood that more than one no dwell zone may occur between idle thrust 90 and maximum thrust 92.

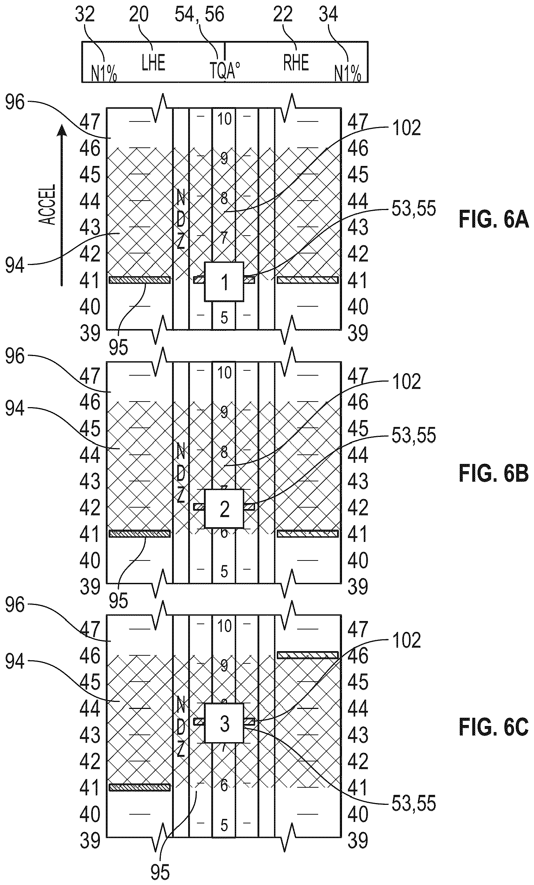

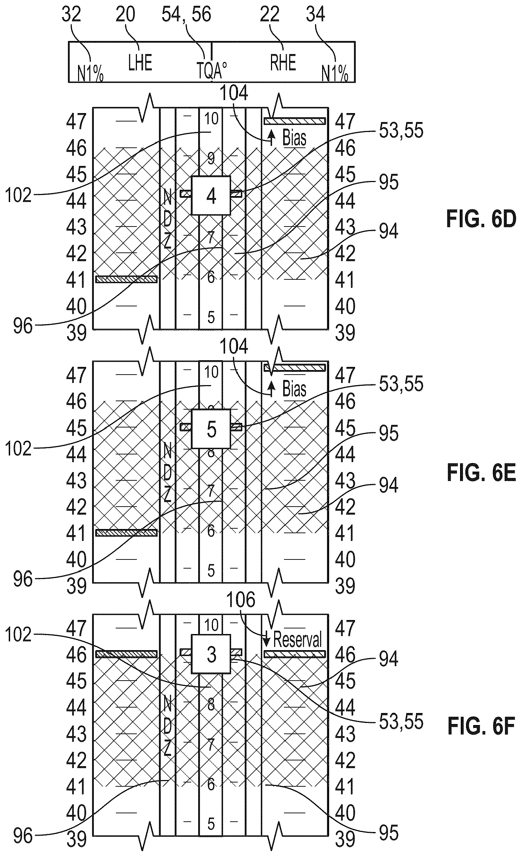

FIGS. 6A-6F illustrate engine responses including compressor fan 32, 34 speeds N1 % to various engine thrust commands 53 and 55 in the no dwell zone 94 in accordance with exemplary embodiments. As illustrated, the no dwell zone 94 is defined from the compressor fan speed lower boundary 95 in which N1 % is about 41% to the compressor fan speed upper boundary 96 in which N1 % is about 46%. Notably, however, although the no dwell zone 94 occurs between idle thrust and about 50% of the maximum thrusts for the engines 20 and 22, it is to be understood that the no dwell zone 94 may occur at one or more zones between idle thrust and maximum thrust of the engines 20 and 22. Further, it is to be noted that while increasing engine vibrations can occur in the no dwell zone 94, at about the compressor fan speed lower and upper boundaries 95 and 96, substantially little or no increase in engine vibrations occurs.

Referring to FIGS. 3-6F, in an exemplary embodiment, when the engine thrust commands 53, 55 correspond to an engine response within the no dwell zone (NDZ) 94 that is defined from the compressor fan speed lower boundary 95 to the compressor fan speed upper boundary 96, the engine electronic controller 50 is operative to direct the engine 20 to have the speed of the compressor fan 32 at or below the compressor fan speed lower boundary 95 and the engine electronic controller 52 is operative to direct the engine 22 to have the speed of the compressor fan 34 at or above the compressor fan speed upper boundary 96, such as illustrated in FIGS. 6C-6E, so that the thrust 48 of the engine 22 is greater than the thrust 46 of the engine 20 to produce an overall average thrust 100 that corresponds to the engine response within the no dwell zone 94 (NDZ). In an exemplary embodiment, advantageously biasing the operation of the engines 20 and 22 at different compressor fan 32 and 34 speeds at the boundaries 95 and/or 96 or just outside of the boundaries 95 and/or 96 of the no dwell zone 94 while producing the overall average thrust 100 that is within the no dwell zone 94, allows the aircraft 10 to continuously operate within the no dwell zone 94 for an extended time without the engines 20 and 22 experiencing increasing levels of vibrations.

The engine responses to the engine thrust commands 53 and 55 within the no dwell zone 94 may occur in a stepwise fashion or otherwise. In the illustrated examples, the engine responses to the engine thrust commands 53 and 55 within the no dwell zone 94 include a stepwise function as described below. In an exemplary embodiment, a predetermined intermediate point 102 is defined in a midway region between the compressor fan speed lower boundary 95 and the compressor fan speed upper boundary 96. In an exemplary embodiment, the predetermined intermediate point 102 is from about (Y + Z)/2.2 to about (Y + Z)/1.3, such as from about (Y + Z)/2 to about (Y + Z)/1.5, for example about (Y + Z)/2, where Y is the compressor fan speed lower boundary 95 and Z is the compressor fan speed upper boundary 96. In the examples illustrated FIGS. 6A-6F, the predetermined intermediate point 102 is N1 % = 43.5%, which is midway between the compressor fan speed lower boundary 95 in which is N1 % = 41% and the compressor fan speed upper boundary 96 in which N1 % = 46%.

In an exemplary embodiment and as illustrated in FIGS. 6A-6B, when the engine thrust commands 53 and 55 include acceleration engine thrust commands corresponding to the engine response accelerating from about the compressor fan speed lower boundary 95 towards the predetermined intermediate point 102, the engine electronic controller 50 directs or otherwise holds the engine 20 to have a speed of the compressor fan 32 at about the compressor fan speed lower boundary 95. Likewise, the engine electronic controller 52 directs or otherwise holds the engine 22 to have a speed of the compressor fan 34 at about the compressor fan speed lower boundary 95. This generates an overall average thrust 100 that corresponds to the engine response at about the compressor fan speed lower boundary 95. In an exemplary embodiment, the foregoing applies or otherwise limits the engines transition across the no dwell zone, for example in icy conditions or the like, but if such conditions were not present, the engine 22 could be accelerated to the upper boundary 96 and the engine 20 decelerated to achieve an average overall trust 100 corresponding to the thrust command 53, 55 shown in FIG. 6B.

In an exemplary embodiment and as illustrated in FIG. 6C, when the engine thrust commands 53 and 55 reach or otherwise correspond to the engine response at about the predetermined intermediate point 102, the engine electronic controller 52 directs the engine 22 to have the speed of the compressor fan 34 at about the compressor fan speed upper boundary 96 while the engine electronic controller 50 directs or otherwise holds the engine 20 to have the speed of the compressor fan 32 at about the compressor fan speed lower boundary 95. This generates an overall average thrust 100 that corresponds to the engine response within the no dwell zone 94 at about the predetermined intermediate point 102.

In an exemplary embodiment and as illustrated in FIGS. 6D-6E, if acceleration continues and the engine thrust commands 53 and 55 include acceleration engine thrust commands 104 corresponding to the engine response accelerating from about the predetermined intermediate point 102 towards the compressor fan speed upper boundary 96, the engine 22 biases higher. In particular, the engine electronic controller 50 directs or otherwise holds the engine 20 to have the speed of the compressor fan 32 at about the compressor fan speed lower boundary 95 while the engine electronic controller 52 directs the engine 22 to increase the speed of the compressor fan 34 above the compressor fan speed upper boundary 96. This generates an overall average thrust 100 that corresponds to the engine response within the no dwell zone 94 above the predetermined intermediate point 102 biasing closer towards the compressor fan speed upper boundary 96 if and as acceleration continues.

In an exemplary embodiment and as illustrated in FIG. 6F, when the engine thrust commands 53 and 55 reach or otherwise correspond to the engine response at about the compressor fan speed upper boundary 96, the engine electronic controller 50 directs the engine 20 to have the speed of the compressor fan 32 at about the compressor fan speed upper boundary 96 and the engine electronic controller 52 directs the engine 22 to have the speed (e.g., adjusting or decreasing the speed) of the compressor fan 34 at about the compressor fan speed upper boundary 96. This generates an overall average thrust 100 that corresponds to the engine response at about the compressor fan speed upper boundary 96.

With continuing reference to FIG. 6F, in an exemplary embodiment, deceleration through the no dwell zone 94 is the inverse response as acceleration but with the engine 20 biasing lower. In an exemplary embodiment, when the engine thrust commands 53 and 55 include deceleration engine thrust commands 106 corresponding to the engine response decelerating from about the compressor fan speed upper boundary 96 towards the predetermined intermediate point 102, the engine electronic controller 50 directs or otherwise holds the engine 20 to have the speed of the compressor fan 32 at about the compressor fan speed upper boundary 96 and the engine electronic controller 52 directs or otherwise holds the engine 22 to have the speed of the compressor fan 34 at about the compressor fan speed upper boundary 96. As discussed above, this generates or keeps the overall average thrust 100 corresponding to the engine response at about the compressor fan speed upper boundary 96.

Further, and as discussed above when the engine thrust commands 53 and 55 reach or otherwise correspond to the engine response at about the predetermined intermediate point 102, the engine electronic controller 52 directs the engine 22 to have or to hold the speed of the compressor fan 34 at about the compressor fan speed upper boundary 96 while the engine electronic controller 50 directs the engine 20 to decease or to have the speed of the compressor fan 32 at about the compressor fan speed lower boundary 95. This generates an overall average thrust 100 that corresponds to the engine response within the no dwell zone 94 at about the predetermined intermediate point 102.

In an exemplary embodiment, if deceleration continues and the engine thrust commands 53 and 55 include the deceleration engine thrust commands 106 corresponding to the engine response decelerating past about the predetermined intermediate point 102 towards the compressor fan speed lower boundary 95, the engine electronic controller 50 directs the engine 20 to decrease the speed of the compressor fan 32 below the compressor fan speed lower boundary 95 and the engine electronic controller 52 directs or otherwise holds the engine 22 to have the speed of the compressor fan 34 at about the compressor fan speed upper boundary 96. This generates an overall average thrust 100 that corresponds to the engine response within the no dwell zone 94 below the predetermined intermediate point 102 biasing closer towards the compressor fan speed lower boundary 95 if and as deceleration continues.

Referring to FIG. 8, a method 200 for controlling thrust of an aircraft in a no dwell zone (NDZ) that is defined from a compressor fan speed lower boundary to a compressor fan speed upper boundary in accordance with an exemplary embodiment is provided. The method 200 includes rotating (STEP 202) a first compressor fan of a first engine of the aircraft at a first speed cooperatively with the first engine generating a first thrust. A second compressor fan of a second engine of the aircraft is rotated (STEP 204) at a second speed cooperatively with the second engine generating a second thrust.

In an exemplary embodiment, engine thrust commands are communicated (STEP 206) from a throttle quadrant assembly (TQA) and/or an auto thrust controller to a first engine electronic controller and a second engine electronic controller. The first engine electronic controller is configured to communicate with and control the first engine and the second engine electronic controller is configured to communicate with and control the second engine.

In an exemplary embodiment, the first engine is directed (STEP 208) via the first engine electronic controller to have the first speed of the first compressor fan at or below the compressor fan speed lower boundary when the engine thrust commands correspond to an engine response within the no dwell zone (NDZ). The second engine is directed (STEP 210) via the second engine electronic controller to have the second speed of the second compressor fan at and/or above the compressor fan speed upper boundary when the engine thrust commands correspond to the engine response within the no dwell zone (NDZ). This results in the second thrust of the second engine being greater than the first thrust of the first engine, to produce an overall average thrust that corresponds to the engine response within the no dwell zone (NDZ).

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It being understood that various changes may be made in the function and arrangement of elements described in an exemplary embodiment without departing from the scope of the invention as set forth in the appended claims.

## Claims

1. An engine electronic controller system (49) for an aircraft (10) having a first engine (20) that includes a first compressor fan (32) that rotates at a first speed cooperatively with the first engine generating a first thrust (46) and a second engine (22) that includes a second compressor fan (34) that rotates at a second speed cooperatively with the second engine generating a second thrust (48), the engine electronic controller system comprising:
a first engine electronic controller (50) configured to communicate with and control the first engine;
a second engine electronic controller (52) configured to communicate with and control the second engine; and
**characterized by**:
at least one of a throttle quadrant assembly (TQA) (54) and an auto thrust controller (56) configured to communicate with the first and second engine electronic controllers to provide engine thrust commands (53, 55), wherein when the engine thrust commands correspond to an engine response within a no dwell zone (NDZ) (94) that is defined from a compressor fan speed lower boundary (95) to a compressor fan speed upper boundary (96), the first engine electronic controller is operative to direct the first engine to have the first speed of the first compressor fan one of at and below the compressor fan speed lower boundary and the second engine electronic controller is operative to direct the second engine to have the second speed of the second compressor fan one of at and above the compressor fan speed upper boundary such that the second thrust of the second engine is greater than the first thrust of the first engine to produce an overall average thrust (100) that corresponds to the engine response within the no dwell zone (NDZ).

2. The engine electronic controller system of claim 1, wherein a predetermined intermediate point (102) is defined in a midway region between the compressor fan speed lower boundary and the compressor fan speed upper boundary, and wherein when the engine thrust commands correspond to the engine response at about the predetermined intermediate point, the first engine electronic controller is operative to direct the first engine to have the first speed of the first compressor fan at about the compressor fan speed lower boundary and the second engine electronic controller is operative to direct the second engine to have the second speed of the second compressor fan at about the compressor fan speed upper boundary.

3. An aircraft (10) comprising:
a fuselage (12) having a first side (11) and a second side (13) disposed opposite the first side;
a first engine (20) disposed adjacent to the first side of the fuselage and comprising a first compressor fan (32) that rotates at a first speed cooperatively with the first engine generating a first thrust (46);
a second engine (22) disposed adjacent to the second side of the fuselage and comprising a second compressor fan (34) that rotates at a second speed cooperatively with the second engine generating a second thrust (48); and
an engine electronic controller system according to claim 1.

4. The aircraft of claim 3, wherein a predetermined intermediate point (102) is defined in a midway region between the compressor fan speed lower boundary and the compressor fan speed upper boundary, and wherein when the engine thrust commands correspond to the engine response at about the predetermined intermediate point, the first engine electronic controller is operative to direct the first engine to have the first speed of the first compressor fan at about the compressor fan speed lower boundary and the second engine electronic controller is operative to direct the second engine to have the second speed of the second compressor fan at about the compressor fan speed upper boundary.

5. The aircraft of claim 4, wherein when the engine thrust commands include acceleration engine thrust commands corresponding to the engine response accelerating from about the compressor fan speed lower boundary towards the predetermined intermediate point, the first engine electronic controller is operative to direct the first engine to have the first speed of the first compressor fan at about the compressor fan speed lower boundary and the second engine electronic controller is operative to direct the second engine to have the second speed of the second compressor fan at about the compressor fan speed lower boundary.

6. The aircraft of claim 4, wherein when the engine thrust commands include acceleration engine thrust commands corresponding to the engine response accelerating from about the predetermined intermediate point towards the compressor fan speed upper boundary, the first engine electronic controller is operative to direct the first engine to have the first speed of the first compressor fan at about the compressor fan speed lower boundary and the second engine electronic controller is operative to direct the second engine to increase the second speed of the second compressor fan above the compressor fan speed upper boundary.

7. The aircraft of claim 4, wherein when the engine thrust commands correspond to the engine response at about the compressor fan speed upper boundary, the first engine electronic controller is operative to direct the first engine to have the first speed of the first compressor fan at about the compressor fan speed upper boundary and the second engine electronic controller is operative to direct the second engine to have the second speed of the second compressor fan at about the compressor fan speed upper boundary.

8. The aircraft of claim 7, wherein when the engine thrust commands include deceleration engine thrust commands corresponding to the engine response decelerating from about the compressor fan speed upper boundary towards the predetermined intermediate point, the first engine electronic controller is operative to direct the first engine to have the first speed of the first compressor fan at about the compressor fan speed upper boundary and the second engine electronic controller is operative to direct the second engine to have the second speed of the second compressor fan at about the compressor fan speed upper boundary.

9. The aircraft of claim 7, wherein when the engine thrust commands include deceleration engine thrust commands corresponding to the engine response decelerating from about the predetermined intermediate point towards the compressor fan speed lower boundary, the first engine electronic controller is operative to direct the first engine to decrease the first speed of the first compressor fan below the compressor fan speed lower boundary and the second engine electronic controller is operative to direct the second engine to have the second speed of the second compressor fan at about the compressor fan speed upper boundary.

10. The aircraft of any one of claims 3-9, wherein the first compressor fan of the first engine rotates at the first speed of from 0 to 100% of a first maximum speed cooperatively with the first engine generating the first thrust of from 0 to 100% of a first maximum thrust (92), wherein the second compressor fan of the first engine rotates at the second speed of from 0 to 100% of a second maximum speed cooperatively with the second engine generating the second thrust of from 0 to 100% of a second maximum thrust (92), wherein the first and second engines correspondingly generate a first idle thrust (90) and a second idle thrust (90) of from about 20 to about 35% of the first and second maximum thrust that corresponds to the first and second speeds of the first and second compressor fans of from about 20 to about 35% of the first and second maximum speeds, respectively, and wherein the no dwell zone (NDZ) is defined at a resonance mode(s) of the first and second compressor fans that occurs anywhere from the first and second idle thrusts to the first and second maximum thrusts.

11. A method for controlling thrust of an aircraft (10) in a no dwell zone (NDZ) (94) that is defined from a compressor fan speed lower boundary (95) to a compressor fan speed upper boundary (96), the method comprising the steps of:
rotating a first compressor fan (32) of a first engine (20) of the aircraft at a first speed cooperatively with the first engine generating a first thrust (46);
rotating a second compressor fan (34) of a second engine (22) of the aircraft at a second speed cooperatively with the second engine generating a second thrust (48);
communicating engine thrust commands from at least one of a throttle quadrant assembly (TQA) (54) and an auto thrust controller (56) to a first engine electronic controller (50) and a second engine electronic controller (52), wherein the first engine electronic controller is configured to communicate with and control the first engine and the second engine electronic controller is configured to communicate with and control the second engine;
directing via the first engine electronic controller the first engine to have the first speed of the first compressor fan one of at and below the compressor fan speed lower boundary when the engine thrust commands correspond to an engine response within the no dwell zone (NDZ); and
directing via the second engine electronic controller the second engine to have the second speed of the second compressor fan one of at and above the compressor fan speed upper boundary when the engine thrust commands correspond to the engine response within the no dwell zone (NDZ) such that the second thrust of the second engine is greater than the first thrust of the first engine, producing an overall average thrust (100) that corresponds to the engine response within the no dwell zone (NDZ).

12. The method of claim 11, wherein a predetermined intermediate point (102) is defined in a midway region between the compressor fan speed lower boundary and the compressor fan speed upper boundary; and
wherein when the engine thrust commands correspond to the engine response at about the predetermined intermediate point,
directing the first engine comprises directing via the first engine electronic controller the first engine to have the first speed of the first compressor fan at about the compressor fan speed lower boundary, and
directing the second engine comprises directing the second engine via the second engine electronic controller the second engine to have the second speed of the second compressor fan at about the compressor fan speed upper boundary.

13. The method of claim 12, wherein when the engine thrust commands include acceleration engine thrust commands corresponding to the engine response accelerating from about the compressor fan speed lower boundary towards the predetermined intermediate point,
directing the first engine further comprises directing the first engine via the first engine electronic controller to have the first speed of the first compressor fan at about the compressor fan speed lower boundary, and
directing the second engine further comprises directing the second engine via the second engine electronic controller to have the second speed of the second compressor fan at about the compressor fan speed lower boundary.

14. The method of claim 12, wherein when the engine thrust commands include acceleration engine thrust commands corresponding to the engine response accelerating from about the predetermined intermediate point towards the compressor fan speed upper boundary,
directing the first engine further comprises directing the first engine via the first engine electronic controller to have the first speed of the first compressor fan at about the compressor fan speed lower boundary, and
directing the second engine further comprises directing the second engine via the second engine electronic controller to increase the second speed of the second compressor fan above the compressor fan speed upper boundary.

15. The method of claim 12, wherein when the engine thrust commands correspond to the engine response at about the compressor fan speed upper boundary,
directing the first engine further comprises directing the first engine via the first engine electronic controller to have the first speed of the first compressor fan at about the compressor fan speed upper boundary, and
directing the second engine further comprises directing the second engine via the second engine electronic controller to have the second speed of the second compressor fan at about the compressor fan speed upper boundary.

## Patentansprüche

1. Flugzeug (10), das Folgendes umfasst:
einen Rumpf (12), der eine erste Seite (11) und eine zweite Seite (13), die gegenüber der ersten Seite angeordnet ist, aufweist,
ein erstes Triebwerk (20), das angrenzend an die erste Seite des Rumpfs angeordnet ist und ein erstes Verdichtergebläse (32) umfasst, das sich mit einer ersten Drehzahl zusammenwirkend mit dem ersten Triebwerk dreht, das einen ersten Schub (46) erzeugt,
einen ersten elektronischen Triebwerksregler (50) in Kommunikation mit dem ersten Triebwerk und dafür konfiguriert, das erste Triebwerk zu regeln,
ein zweites Triebwerk (22), das angrenzend an die zweite Seite des Rumpfs angeordnet ist und ein zweites Verdichtergebläse (34) umfasst, das sich mit einer zweiten Drehzahl zusammenwirkend mit dem zweiten Triebwerk dreht, das einen zweiten Schub (48) erzeugt,
einen zweiten elektronischen Triebwerksregler (52) in Kommunikation mit dem zweiten Triebwerk und dafür konfiguriert, das zweite Triebwerk zu regeln, und
**gekennzeichnet durch**:
mindestens eines von einer Leistungshebelbaugruppe (throttle quadrant assembly - TQA) (54) und einem automatischen Schubregler (56) in Kommunikation mit dem ersten und dem zweiten elektronischen Triebwerksregler, um Triebwerksschubbefehle (53, 55) bereitzustellen, wobei, wenn die Triebwerksschubbefehle einem Triebwerksansprechverhalten innerhalb einer Nicht-Verweilzone (no dwell zone - NDZ) (94) entsprechen, die von einer Verdichtergebläsedrehzahl-Untergrenze (95) bis zu einer Verdichtergebläsedrehzahl-Obergrenze (96) definiert ist, der erste elektronische Triebwerksregler funktionsfähig ist, um das erste Triebwerk anzuweisen, die erste Drehzahl des ersten Verdichtergebläses entweder bei oder unterhalb der Verdichtergebläsedrehzahl-Untergrenze zu haben, und der zweite elektronische Triebwerksregler funktionsfähig ist, um das zweite Triebwerk anzuweisen, die zweite Drehzahl des zweiten Verdichtergebläses entweder bei oder oberhalb der Verdichtergebläsedrehzahl-Obergrenze zu haben, so dass der zweite Schub des zweiten Triebwerks größer ist als der erste Schub des ersten Triebwerks, um einen durchschnittlichen Gesamtschub (100) zu erzeugen, der dem Triebwerksansprechverhalten innerhalb der Nicht-Verweilzone (NDZ) entspricht.

2. Flugzeug nach Anspruch 1, wobei ein vorbestimmter Zwischenpunkt (102) in einem Mittelbereich zwischen der Verdichtergebläsedrehzahl-Untergrenze und der Verdichtergebläsedrehzahl-Obergrenze definiert ist und wobei, wenn die Triebwerksschubbefehle dem Triebwerksansprechverhalten bei etwa dem vorbestimmten Zwischenpunkt entsprechen, der erste elektronische Triebwerksregler funktionsfähig ist, um das erste Triebwerk anzuweisen, die erste Drehzahl des ersten Verdichtergebläses bei etwa der Verdichtergebläsedrehzahl-Untergrenze zu haben, und der zweite elektronische Triebwerksregler funktionsfähig ist, um das zweite Triebwerk anzuweisen, die zweite Drehzahl des zweiten Verdichtergebläses bei etwa der Verdichtergebläsedrehzahl-Obergrenze zu haben.

3. Flugzeug nach Anspruch 2, wobei, wenn die Triebwerksschubbefehle Beschleunigungstriebwerksschubbefehle einschließen, die dem Triebwerksansprechverhalten entsprechen, das von etwa der Verdichtergebläsedrehzahl-Untergrenze hin zu dem vorbestimmten Zwischenpunkt beschleunigt, der erste elektronische Triebwerksregler funktionsfähig ist, um das erste Triebwerk anzuweisen, die erste Drehzahl des ersten Verdichtergebläses bei etwa der Verdichtergebläsedrehzahl-Untergrenze zu haben, und der zweite elektronische Triebwerksregler funktionsfähig ist, um das zweite Triebwerk anzuweisen, die zweite Drehzahl des zweiten Verdichtergebläses bei etwa der Verdichtergebläsedrehzahl-Untergrenze zu haben.

4. Flugzeug nach Anspruch 2, wobei, wenn die Triebwerksschubbefehle Beschleunigungstriebwerksschubbefehle einschließen, die dem Triebwerksansprechverhalten entsprechen, das von etwa dem vorbestimmten Zwischenpunkt hin zu der Verdichtergebläsedrehzahl-Obergrenze beschleunigt, der erste elektronische Triebwerksregler funktionsfähig ist, um das erste Triebwerk anzuweisen, die erste Drehzahl des ersten Verdichtergebläses bei etwa der Verdichtergebläsedrehzahl-Untergrenze zu haben, und der zweite elektronische Triebwerksregler funktionsfähig ist, um das zweite Triebwerk anzuweisen, die zweite Drehzahl des zweiten Verdichtergebläses oberhalb der Verdichtergebläsedrehzahl-Obergrenze zu steigern.

5. Flugzeug nach Anspruch 2, wobei, wenn die Triebwerksschubbefehle einem Triebwerksansprechverhalten bei etwa der Verdichtergebläsedrehzahl-Obergrenze entsprechen, der erste elektronische Triebwerksregler funktionsfähig ist, um das erste Triebwerk anzuweisen, die erste Drehzahl des ersten Verdichtergebläses bei etwa der Verdichtergebläsedrehzahl-Obergrenze zu haben, und der zweite elektronische Triebwerksregler funktionsfähig ist, um das zweite Triebwerk anzuweisen, die zweite Drehzahl des zweiten Verdichtergebläses bei etwa der Verdichtergebläsedrehzahl-Obergrenze zu haben.

6. Flugzeug nach Anspruch 5, wobei, wenn die Triebwerksschubbefehle Verzögerungstriebwerksschubbefehle einschließen, die dem Triebwerksansprechverhalten entsprechen, das von etwa der Verdichtergebläsedrehzahl-Obergrenze hin zu dem vorbestimmten Zwischenpunkt verzögert, der erste elektronische Triebwerksregler funktionsfähig ist, um das erste Triebwerk anzuweisen, die erste Drehzahl des ersten Verdichtergebläses bei etwa der Verdichtergebläsedrehzahl-Obergrenze zu haben, und der zweite elektronische Triebwerksregler funktionsfähig ist, um das zweite Triebwerk anzuweisen, die zweite Drehzahl des zweiten Verdichtergebläses bei etwa der Verdichtergebläsedrehzahl-Obergrenze zu haben.

7. Flugzeug nach Anspruch 5, wobei, wenn die Triebwerksschubbefehle Verzögerungstriebwerksschubbefehle einschließen, die dem Triebwerksansprechverhalten entsprechen, das von etwa dem vorbestimmten Zwischenpunkt hin zu der Verdichtergebläsedrehzahl-Untergrenze verzögert, der erste elektronische Triebwerksregler funktionsfähig ist, um das erste Triebwerk anzuweisen, die erste Drehzahl des ersten Verdichtergebläses unterhalb der Verdichtergebläsedrehzahl-Untergrenze zu verzögern, und der zweite elektronische Triebwerksregler funktionsfähig ist, um das zweite Triebwerk anzuweisen, die zweite Drehzahl des zweiten Verdichtergebläses bei etwa der Verdichtergebläsedrehzahl-Obergrenze zu haben.

8. Flugzeug nach einem der Ansprüche 1 bis 7, wobei sich das erste Verdichtergebläse des ersten Triebwerks mit der ersten Drehzahl von 0 bis 100 % einer ersten maximalen Drehzahl zusammenwirkend mit dem ersten Triebwerk dreht, das den ersten Schub von 0 bis 100 % eines ersten maximalen Schubs (92) erzeugt, wobei sich das zweite Verdichtergebläse des zweiten Triebwerks mit der zweiten Drehzahl von 0 bis 100 % einer zweiten maximalen Drehzahl zusammenwirkend mit dem zweiten Triebwerk dreht, das den zweiten Schub von 0 bis 100 % eines zweiten maximalen Schubs (92) erzeugt, wobei das erste und das zweite Triebwerk dementsprechend einen ersten Leerlaufschub (90) und einen zweiten Leerlaufschub (90) von etwa 20 bis etwa 35 % des ersten und des zweiten maximalen Schubs erzeugen, welcher jeweils der ersten und der zweiten Drehzahl des ersten und des zweiten Verdichtergebläses von etwa 20 bis etwa 35 % der ersten beziehungsweise zweiten maximalen Drehzahl entspricht, und wobei die Nicht-Verweilzone (NDZ) bei (einem) Resonanzmodus(-modi) des ersten und des zweiten Verdichtergebläses definiert ist, die irgendwo von dem ersten und dem zweiten Leerlaufschub bis zu dem ersten und dem zweiten maximalen Schub auftritt.

9. Elektronisches Triebwerksregelungssystem (49) für ein Flugzeug (10), das ein erstes Triebwerk (20), das ein erstes Verdichtergebläse (32) einschließt, das sich mit einer ersten Drehzahl zusammenwirkend mit dem ersten Triebwerk dreht, das einen ersten Schub (46) erzeugt, und ein zweites Triebwerk (22), das ein zweites Verdichtergebläse (34) einschließt, das sich mit einer zweiten Drehzahl zusammenwirkend mit dem zweiten Triebwerk dreht, das einen zweiten Schub (48) erzeugt, aufweist, wobei das elektronische Triebwerksregelungssystem Folgendes umfasst:
einen ersten elektronischen Triebwerksregler (50), der dafür konfiguriert ist, mit dem ersten Triebwerk zu kommunizieren und dasselbe zu regeln,
einen zweiten elektronischen Triebwerksregler (52), der dafür konfiguriert ist, mit dem zweiten Triebwerk zu kommunizieren und dasselbe zu regeln, und
**gekennzeichnet durch**:
mindestens eines von einer Leistungshebelbaugruppe (TQA) (54) und einem automatischen Schubregler (56), das dafür konfiguriert ist, mit dem ersten und dem zweiten elektronischen Triebwerksregler zu kommunizieren, um Triebwerksschubbefehle bereitzustellen, wobei, wenn die Triebwerksschubbefehle einem Triebwerksansprechverhalten innerhalb einer Nicht-Verweilzone (NDZ) (94) entsprechen, die von einer Verdichtergebläsedrehzahl-Untergrenze (95) bis zu einer Verdichtergebläsedrehzahl-Obergrenze (96) definiert ist, der erste elektronische Triebwerksregler funktionsfähig ist, um das erste Triebwerk anzuweisen, die erste Drehzahl des ersten Verdichtergebläses entweder bei oder unterhalb der Verdichtergebläsedrehzahl-Untergrenze zu haben, und der zweite elektronische Triebwerksregler funktionsfähig ist, um das zweite Triebwerk anzuweisen, die zweite Drehzahl des zweiten Verdichtergebläses entweder bei oder oberhalb der Verdichtergebläsedrehzahl-Obergrenze zu haben, so dass der zweite Schub des zweiten Triebwerks größer ist als der erste Schub des ersten Triebwerks, um einen durchschnittlichen Gesamtschub (100) zu erzeugen, der dem Triebwerksansprechverhalten innerhalb der Nicht-Verweilzone (NDZ) entspricht.

10. Elektronisches Triebwerksregelungssystem nach Anspruch 9, wobei ein vorbestimmter Zwischenpunkt (102) in einem Mittelbereich zwischen der Verdichtergebläsedrehzahl-Untergrenze und der Verdichtergebläsedrehzahl-Obergrenze definiert ist und wobei, wenn die Triebwerksschubbefehle dem Triebwerksansprechverhalten bei etwa dem vorbestimmten Zwischenpunkt entsprechen, der erste elektronische Triebwerksregler funktionsfähig ist, um das erste Triebwerk anzuweisen, die erste Drehzahl des ersten Verdichtergebläses bei etwa der Verdichtergebläsedrehzahl-Untergrenze zu haben, und der zweite elektronische Triebwerksregler funktionsfähig ist, um das zweite Triebwerk anzuweisen, die zweite Drehzahl des zweiten Verdichtergebläses bei etwa der Verdichtergebläsedrehzahl-Obergrenze zu haben.

11. Verfahren zum Regeln des Schubs eines Flugzeugs (10) in einer Nicht-Verweilzone (NDZ) (94), die von einer Verdichtergebläsedrehzahl-Untergrenze (95) bis zu einer Verdichtergebläsedrehzahl-Obergrenze (96) definiert ist, wobei das Verfahren die folgenden Schritte umfasst:
Drehen eines ersten Verdichtergebläses (32) eines ersten Triebwerks (20) des Flugzeugs mit einer ersten Drehzahl zusammenwirkend mit dem ersten Triebwerk, das einen ersten Schub (46) erzeugt,
Drehen eines zweiten Verdichtergebläses (34) eines ersten Triebwerks (22) des Flugzeugs mit einer zweiten Drehzahl zusammenwirkend mit dem zweiten Triebwerk, das einen zweiten Schub (48) erzeugt,
Kommunizieren von Triebwerksschubbefehlen von mindestens einem von einer Leistungshebelbaugruppe (TQA) (54) und einem automatischen Schubregler (56) an einen ersten elektronischen Triebwerksregler (50) und einen zweiten elektronischen Triebwerksregler (52), wobei der erste elektronische Triebwerksregler dafür konfiguriert ist, mit dem ersten Triebwerk zu kommunizieren und dasselbe zu regeln, und der zweite elektronische Triebwerksregler dafür konfiguriert ist, mit dem zweiten Triebwerk zu kommunizieren und dasselbe zu regeln,
Anweisen des ersten Triebwerks über den ersten elektronischen Triebwerksregler, die erste Drehzahl des ersten Verdichtergebläses entweder bei oder unterhalb der Verdichtergebläsedrehzahl-Untergrenze zu haben, wenn die Triebwerksschubbefehle einem Triebwerksansprechverhalten innerhalb der Nicht-Verweilzone (NDZ) entsprechen, und
Anweisen des zweiten Triebwerks über den zweiten elektronischen Triebwerksregler, die zweite Drehzahl des zweiten Verdichtergebläses entweder bei oder oberhalb der Verdichtergebläsedrehzahl-Obergrenze zu haben, wenn die Triebwerksschubbefehle einem Triebwerksansprechverhalten innerhalb der Nicht-Verweilzone (NDZ) entsprechen, so dass der zweite Schub des zweiten Triebwerks größer ist als der erste Schub des ersten Triebwerks, was einen durchschnittlichen Gesamtschub (100) erzeugt, der dem Triebwerksansprechverhalten innerhalb der Nicht-Verweilzone (NDZ) entspricht.

12. Verfahren nach Anspruch 11, wobei ein vorbestimmter Zwischenpunkt (102) in einem Mittelbereich zwischen der Verdichtergebläsedrehzahl-Untergrenze und der Verdichtergebläsedrehzahl-Obergrenze definiert ist und
wobei, wenn die Triebwerksschubbefehle dem Triebwerksansprechverhalten bei etwa dem vorbestimmten Zwischenpunkt entsprechen,
das Anweisen des ersten Triebwerks das Anweisen des ersten Triebwerks über den ersten elektronischen Triebwerksregler umfasst, die erste Drehzahl des ersten Verdichtergebläses bei etwa der Verdichtergebläsedrehzahl-Untergrenze zu haben, und
das Anweisen des zweiten Triebwerks das Anweisen des zweiten Triebwerks über den zweiten elektronischen Triebwerksregler umfasst, die zweite Drehzahl des zweiten Verdichtergebläses bei etwa der Verdichtergebläsedrehzahl-Obergrenze zu haben.

13. Verfahren nach Anspruch 12, wobei, wenn die Triebwerksschubbefehle Beschleunigungstriebwerksschubbefehle einschließen, die dem Triebwerksansprechverhalten entsprechen, das von etwa der Verdichtergebläsedrehzahl-Untergrenze hin zu dem vorbestimmten Zwischenpunkt beschleunigt,
das Anweisen des ersten Triebwerks ferner das Anweisen des ersten Triebwerks über den ersten elektronischen Triebwerksregler umfasst, die erste Drehzahl des ersten Verdichtergebläses bei etwa der Verdichtergebläsedrehzahl-Untergrenze zu haben, und
das Anweisen des zweiten Triebwerks ferner das Anweisen des zweiten Triebwerks über den zweiten elektronischen Triebwerksregler umfasst, die zweite Drehzahl des zweiten Verdichtergebläses bei etwa der Verdichtergebläsedrehzahl-Untergrenze zu haben.

14. Verfahren nach Anspruch 12, wobei, wenn die Triebwerksschubbefehle Beschleunigungstriebwerksschubbefehle einschließen, die dem Triebwerksansprechverhalten entsprechen, das von etwa dem vorbestimmten Zwischenpunkt hin zu der Verdichtergebläsedrehzahl-Obergrenze beschleunigt,
das Anweisen des ersten Triebwerks ferner das Anweisen des ersten Triebwerks über den ersten elektronischen Triebwerksregler umfasst, die erste Drehzahl des ersten Verdichtergebläses bei etwa der Verdichtergebläsedrehzahl-Untergrenze zu haben, und
das Anweisen des zweiten Triebwerks ferner das Anweisen des zweiten Triebwerks über den zweiten elektronischen Triebwerksregler umfasst, die zweite Drehzahl des zweiten Verdichtergebläses oberhalb der Verdichtergebläsedrehzahl-Obergrenze zu steigern.

15. Verfahren nach Anspruch 12, wobei, wenn die Triebwerksschubbefehle einem Triebwerksansprechverhalten bei etwa der Verdichtergebläsedrehzahl-Obergrenze entsprechen,
das Anweisen des ersten Triebwerks ferner das Anweisen des ersten Triebwerks über den ersten elektronischen Triebwerksregler umfasst, die erste Drehzahl des ersten Verdichtergebläses bei etwa der Verdichtergebläsedrehzahl-Obergrenze zu haben, und
das Anweisen des zweiten Triebwerks ferner das Anweisen des zweiten Triebwerks über den zweiten elektronischen Triebwerksregler umfasst, die zweite Drehzahl des zweiten Verdichtergebläses bei etwa der Verdichtergebläsedrehzahl-Obergrenze zu haben.

## Revendications

1. Aéronef (10) comprenant:
un fuselage (12) ayant un premier côté (11) et un deuxième côté (13) disposé à l'opposé du premier côté;
un premier moteur (20) juxtaposé au premier côté du fuselage et comprenant un premier ventilateur de compresseur (32) qui tourne à une première vitesse en coopération avec le premier moteur générant une première poussée (46);
un premier contrôleur électronique de moteur (50) en communication avec le premier moteur et configuré pour commander le premier moteur ;
un deuxième moteur (22) juxtaposé au deuxième côté du fuselage et comprenant un deuxième ventilateur de compresseur (34) qui tourne à une deuxième vitesse en coopération avec le deuxième moteur générant une deuxième poussée (48);
un deuxième contrôleur électronique de moteur (52) en communication avec le deuxième moteur et configuré pour commander le deuxième moteur; et
**caractérisé par**:
au moins un d'un ensemble de quadrant de papillon des gaz (TQA) (54) et d'un contrôleur de poussée automatique (56) en communication avec les premier et deuxième contrôleurs électroniques de moteur pour fournir des commandes de poussée de moteur (53, 55), dans lequel lorsque les commandes de poussée de moteur correspondent à une réponse du moteur dans une zone d'arrêt (NDZ) (94) qui est définie d'une limite inférieure de vitesse de ventilateur de compresseur (95) à une limite supérieure de vitesse de ventilateur de compresseur (96), le premier contrôleur électronique de moteur fonctionne pour diriger le premier moteur afin qu'il ait la première vitesse du ventilateur du premier compresseur égale ou inférieure à la limite inférieure de la vitesse du ventilateur de compresseur et le deuxième contrôleur électronique de moteur fonctionne pour diriger le deuxième moteur afin qu'il ait la deuxième vitesse du ventilateur du deuxième compresseur égale ou supérieure à la limite supérieure de la vitesse du ventilateur de compresseur de sorte que la deuxième poussée du deuxième moteur soit supérieure à la première poussée du premier moteur pour produire une poussée moyenne globale (100) qui correspond à la réponse du moteur dans la zone d'arrêt (NDZ).

2. Aéronef selon la revendication 1, dans lequel un point intermédiaire prédéterminé (102) est défini dans une région médiane entre la limite inférieure de la vitesse du ventilateur de compresseur et la limite supérieure de la vitesse du ventilateur de compresseur, et dans lequel, lorsque les commandes de poussée du moteur correspondent à la réponse du moteur à peu près au point intermédiaire prédéterminé, le contrôleur électronique du premier moteur fonctionne pour diriger le premier moteur afin qu'il ait la première vitesse du ventilateur du premier compresseur à peu près à la limite inférieure de la vitesse du ventilateur de compresseur et le contrôleur électronique du deuxième moteur fonctionne pour diriger le deuxième moteur afin qu'il ait deuxième vitesse du deuxième ventilateur de compresseur à peu près à la limite supérieure de la vitesse du ventilateur de compresseur.

3. Aéronef selon la revendication 2, dans lequel lorsque les commandes de poussée du moteur comprennent des commandes de poussée du moteur d'accélération correspondant à la réponse du moteur accélérant à partir d'environ la limite inférieure de la vitesse du ventilateur de compresseur vers le point intermédiaire prédéterminé, le premier contrôleur électronique du moteur fonctionne pour diriger le premier moteur afin qu'il ait la première vitesse du ventilateur du premier compresseur à peu près à la limite inférieure de la vitesse du ventilateur de compresseur et le deuxième contrôleur électronique de moteur fonctionne pour diriger le deuxième moteur afin qu'il ait la deuxième vitesse du deuxième ventilateur de compresseur à peu près à la limite inférieure de la vitesse du ventilateur de compresseur.

4. Aéronef selon la revendication 2, dans lequel lorsque les commandes de poussée du moteur comprennent des commandes de poussée du moteur d'accélération correspondant à la réponse du moteur accélérant à partir d'environ le point intermédiaire prédéterminé vers la limite supérieure de la vitesse du ventilateur de compresseur, le premier contrôleur électronique du moteur fonctionne pour diriger le premier moteur afin qu'il ait la première vitesse du premier ventilateur de compresseur à peu près à la limite inférieure de la vitesse du ventilateur de compresseur et le deuxième contrôleur électronique de moteur fonctionne pour diriger le deuxième moteur afin d'augmenter la deuxième vitesse du deuxième ventilateur de compresseur au-dessus de la limite supérieure de la vitesse du ventilateur de compresseur.

5. Aéronef selon la revendication 2, dans lequel lorsque les commandes de poussée du moteur correspondent à la réponse du moteur à environ la limite supérieure de la vitesse du ventilateur de compresseur, le premier contrôleur électronique du moteur fonctionne pour diriger le premier moteur afin qu'il ait la première vitesse du premier ventilateur de compresseur à environ la limite supérieure de la vitesse du ventilateur de compresseur et le deuxième contrôleur électronique de moteur fonctionne pour diriger le deuxième moteur afin qu'il ait la deuxième vitesse du deuxième ventilateur de compresseur à peu près à la limite supérieure de la vitesse du ventilateur de compresseur.

6. Aéronef selon la revendication 5, dans lequel lorsque les commandes de poussée du moteur comprennent des commandes de poussée du moteur de décélération correspondant à la réponse du moteur décélérant d'environ la limite supérieure de la vitesse du ventilateur de compresseur vers le point intermédiaire prédéterminé, le premier contrôleur électronique du moteur fonctionne pour diriger le premier moteur afin qu'il ait la première vitesse du ventilateur du premier compresseur à peu près à la limite supérieure de la vitesse du ventilateur de compresseur et le deuxième contrôleur électronique de moteur fonctionne pour diriger le deuxième moteur afin qu'il ait la deuxième vitesse du deuxième ventilateur de compresseur à peu près à la limite supérieure de la vitesse du ventilateur de compresseur.

7. Aéronef selon la revendication 5, dans lequel lorsque les commandes de poussée du moteur comprennent des commandes de poussée du moteur de décélération correspondant à la réponse du moteur décélérant à partir d'environ le point intermédiaire prédéterminé vers la limite inférieure de la vitesse du ventilateur de compresseur, le premier contrôleur électronique du moteur fonctionne pour diriger le premier moteur vers la diminution de la première vitesse du premier ventilateur de compresseur au-dessous de la limite inférieure de la vitesse du ventilateur de compresseur et le deuxième contrôleur électronique de moteur fonctionne pour diriger le deuxième moteur afin que la deuxième vitesse du deuxième ventilateur de compresseur soit à peu près à la limite supérieure de la vitesse du ventilateur de compresseur.

8. Aéronef selon une quelconque des revendications 1 à 7, dans lequel le premier ventilateur de compresseur du premier moteur tourne à la première vitesse de 0 à 100% d'une première vitesse maximale en coopération avec le premier moteur générant la première poussée de 0 à 100 % d'une première poussée maximale (92), dans lequel le deuxième ventilateur de compresseur du premier moteur tourne à la deuxième vitesse de 0 à 100 % d'une deuxième vitesse maximale en coopération avec le deuxième moteur générant la deuxième poussée de 0 à 100 % d'une deuxième poussée maximale (92), dans lequel les premier et deuxième moteurs génèrent de manière correspondante une première poussée au ralenti (90) et une deuxième poussée au ralenti (90) d'environ 20 à environ 35 % de la première et de la deuxième poussée maximale qui correspond à les première et deuxième vitesses des premier et deuxième ventilateurs de compresseur d'environ 20 à environ 35 % des première et deuxième vitesses maximales, respectivement, et dans lequel la zone d'arrêt (NDZ) est définie à un ou plusieurs modes de résonance du ventilateurs du premier et du deuxième compresseur qui se produisent n'importe où entre les première et deuxième poussées au ralenti et les première et deuxième poussées maximales.

9. Système de contrôleur électronique de moteur (49) pour un aéronef (10) ayant un premier moteur (20) qui comprend un premier ventilateur de compresseur (32) qui tourne à une première vitesse en coopération avec le premier moteur générant une première poussée (46) et une un deuxième moteur (22) qui comprend un deuxième ventilateur de compresseur (34) qui tourne à une deuxième vitesse en coopération avec le deuxième moteur générant une deuxième poussée (48), le système de commande électronique du moteur comprenant:
un premier contrôleur électronique de moteur (50) configuré pour communiquer avec et commander le premier moteur;
un deuxième contrôleur électronique de moteur (52) configuré pour communiquer avec et commander le deuxième moteur; et
**caractérisé par** :
au moins un d'un ensemble de quadrant de papillon des gaz (TQA) (54) et d'un contrôleur de poussée automatique (56) configuré pour communiquer avec les premier et deuxième contrôleurs électroniques de moteur pour fournir des commandes de poussée de moteur, dans lequel lorsque les commandes de poussée du moteur correspondent à une réponse du moteur à l'intérieur d'une zone d'arrêt (NDZ) (94) qui est définie à partir d'une limite inférieure de vitesse de ventilateur de compresseur (95) jusqu'à une limite supérieure de vitesse de ventilateur de compresseur (96), le premier contrôleur électronique de moteur fonctionne pour diriger le premier moteur afin que la première vitesse du ventilateur du premier compresseur soit égale ou inférieure à la limite inférieure de la vitesse du ventilateur de compresseur et le deuxième contrôleur électronique de moteur fonctionne pour diriger le deuxième moteur afin que la deuxième vitesse du ventilateur du deuxième compresseur soit égale ou supérieure à la limite supérieure de la vitesse du ventilateur de compresseur telle que la deuxième poussée du deuxième moteur soit supérieure à la première poussée du premier moteur pour produire une poussée moyenne globale (100) qui correspond à la réponse du moteur dans la zone d'arrêt (NDZ).

10. Système de contrôleur électronique de moteur selon la revendication 9, dans lequel un point intermédiaire prédéterminé (102) est défini dans une région médiane entre la limite inférieure de la vitesse du ventilateur de compresseur et la limite supérieure de la vitesse du ventilateur de compresseur, et dans lequel, lorsque les commandes de poussée du moteur correspondent à la réponse du moteur à peu près au point intermédiaire prédéterminé, le premier contrôleur électronique de moteur fonctionne pour diriger le premier moteur afin qu'il ait la première vitesse du premier ventilateur de compresseur à peu près à la limite inférieure de la vitesse du ventilateur de compresseur et le deuxième contrôleur électronique de moteur fonctionne pour diriger le deuxième moteur pour que la deuxième vitesse du deuxième ventilateur de compresseur se situe à peu près à la limite supérieure de la vitesse du ventilateur de compresseur.

11. Procédé de commande de la poussée d'un aéronef (10) dans une zone sans palier (NDZ) (94) qui est définie à partir d'une limite inférieure de vitesse de ventilateur de compresseur (95) jusqu'à une limite supérieure de vitesse de ventilateur de compresseur (96), le procédé comprenant les étapes consistant à:
faire tourner un premier ventilateur de compresseur (32) d'un premier moteur (20) de l'aéronef à une première vitesse en coopération avec le premier moteur générant une première poussée (46);
faire tourner un deuxième ventilateur de compresseur (34) d'un deuxième moteur (22) de l'aéronef à une deuxième vitesse en coopération avec le deuxième moteur générant une deuxième poussée (48);
communiquer les commandes de poussée du moteur à partir d'au moins un d'un ensemble de quadrant de papillon des gaz (TQA) (54) et d'un contrôleur de poussée automatique (56) à un premier contrôleur électronique de moteur (50) et à un deuxième contrôleur électronique de moteur (52), dans lequel le premier contrôleur électronique de moteur est configuré pour communiquer avec et commander le premier moteur et le contrôleur électronique du deuxième moteur est configuré pour communiquer avec et commander le deuxième moteur;
diriger par l'intermédiaire du premier contrôleur électronique de moteur le premier moteur afin qu'il ait la première vitesse du premier ventilateur de compresseur égale ou inférieure à la limite inférieure de la vitesse du ventilateur de compresseur lorsque les commandes de poussée du moteur correspondent à une réponse du moteur dans la zone d'arrêt (NDZ); et
diriger par l'intermédiaire du deuxième contrôleur électronique de moteur le deuxième moteur afin qu'il ait la deuxième vitesse du deuxième ventilateur de compresseur à et au-dessus de la limite supérieure de la vitesse du ventilateur de compresseur lorsque les commandes de poussée du moteur correspondent à la réponse du moteur dans la zone d'arrêt (NDZ) telle que la deuxième poussée du deuxième moteur soit supérieure à la première poussée du premier moteur, produisant une poussée moyenne globale (100) qui correspond à la réponse du moteur à l'intérieur de la zone d'arrêt (NDZ).

12. Procédé selon la revendication 11, dans lequel un point intermédiaire prédéterminé (102) est défini dans une région médiane entre la limite inférieure de la vitesse du ventilateur de compresseur et la limite supérieure de la vitesse du ventilateur de compresseur; et
dans lequel lorsque les commandes de poussée du moteur correspondent à la réponse du moteur à peu près au point intermédiaire prédéterminé,
diriger le premier moteur comprend de diriger le premier moteur via le premier contrôleur électronique de moteur afin qu'il ait la première vitesse du premier ventilateur de compresseur à environ la limite inférieure de la vitesse du ventilateur de compresseur, et
diriger le deuxième moteur comprend de diriger le deuxième moteur via le contrôleur électronique de moteur afin que le deuxième moteur ait la deuxième vitesse du ventilateur du deuxième compresseur à peu près à la limite supérieure de la vitesse du ventilateur de compresseur.

13. Procédé selon la revendication 12, dans lequel lorsque les commandes de poussée du moteur comprennent des commandes de poussée du moteur d'accélérateur correspondant à la réponse du moteur accélérant depuis environ la limite inférieure de la vitesse du ventilateur de compresseur jusqu'au point intermédiaire prédéterminé,
diriger le premier moteur comprend en outre de diriger le premier moteur via le premier contrôleur électronique de moteur afin qu'il ait la première vitesse du premier ventilateur de compresseur à environ la limite inférieure de la vitesse du ventilateur de compresseur, et
diriger le deuxième moteur comprend en outre de diriger le deuxième moteur via le deuxième contrôleur électronique de moteur pour que la deuxième vitesse du deuxième ventilateur de compresseur se situe à peu près à la limite inférieure de la vitesse du ventilateur de compresseur.

14. Procédé selon la revendication 12, dans lequel, lorsque les commandes de poussée du moteur comprennent des commandes de poussée du moteur d'accélération correspondant à la réponse du moteur accélérant à partir d'environ le point intermédiaire prédéterminé vers la limite supérieure de la vitesse du ventilateur de compresseur,
diriger le premier moteur comprend en outre de diriger le premier moteur via le premier contrôleur électronique de moteur afin qu'il ait la première vitesse du premier ventilateur de compresseur à environ la limite inférieure de la vitesse du ventilateur de compresseur, et
diriger le deuxième moteur comprend en outre de diriger le deuxième moteur via le deuxième contrôleur électronique de moteur pour augmenter la deuxième vitesse du deuxième ventilateur de compresseur au-dessus de la limite supérieure de la vitesse du ventilateur de compresseur.

15. Procédé selon la revendication 12, dans lequel, lorsque les commandes de poussée du moteur correspondent à la réponse du moteur à peu près à la limite supérieure de la vitesse du ventilateur de compresseur,
diriger le premier moteur comprend en outre de diriger le premier moteur via le premier contrôleur électronique de moteur afin qu'il ait la première vitesse du premier ventilateur de compresseur à environ la limite supérieure de la vitesse du ventilateur de compresseur, et
diriger le deuxième moteur comprend en outre de diriger le deuxième moteur par l'intermédiaire du deuxième contrôleur électronique de moteur pour que la deuxième vitesse du deuxième ventilateur de compresseur se situe à peu près à la limite supérieure de la vitesse du ventilateur de compresseur.
